Europäisches Patentamt

European Patent Office

Office européen des brevets

(11) Veröffentlichungsnummer: **0 518 160 A1**

## EUROPÄISCHE PATENTANMELDUNG

(21) Anmeldenummer: **92109224.3**

(22) Anmeldetag: **02.06.92**

(51) Int. Cl.⁵: **A01D 34/74**

(30) Priorität: **14.06.91 US 715177**

(43) Veröffentlichungstag der Anmeldung:
**16.12.92 Patentblatt 92/51**

(84) Benannte Vertragsstaaten:
**DE ES FR GB IT SE**

(71) Anmelder: **DEERE & COMPANY**
**1 John Deere Road**
**Moline, Illinois 61265(US)**

(72) Erfinder: **Teal, Richard Donald**
**510 S. Ridge Circle**
**Horicon, Wisconsin 53032(US)**
Erfinder: **Patterson, Jon Michael**
**659 N. 99th Street**
**Wauwatosa, Wisconsin 53226(US)**
Erfinder: **Hutchison, Wayne Robert**
**N7840 Highway TW**
**Mayville, Wisconsin 53050(US)**

(74) Vertreter: **Feldmann, Bernhard et al**
**DEERE & COMPANY European Office Patent**
**Department Steubenstrasse 36-42**
**W-6800 Mannheim 1(DE)**

(54) **Höheneinstellvorrichtung für ein an ein Fahrzeug anschliessbares Mähwerksgehäuse.**

(57) Bei einer Höheneinstellvorrichtung für ein Mähwerksgehäuse, das von einem einen Rahmen (12) aufweisenden Fahrzeug über mindestens eine Hubstange (26) getragen wird und über einen Hebel (20) höhenverstellbar ist, der an seinem einen Ende von einer Bedienungsperson erfaßbar ist und ein zweites Ende aufweist, das am Fahrzeug um eine horizontale Achse schwenkbar gelagert ist, ist die Hubstange (26) an dem Hebel (20) angelenkt, ist der Rahmen (12) mit einem Tragteil (40) versehen, weist der Tragteil nebeneinanderliegende Stufen (42) unterschiedlicher Höhe auf und ist der Hebel (20) wahlweise mit einer der Stufen (42, 142) kuppelbar.

Fig. 2

Die Erfindung bezieht sich auf eine Höheneinstellvorrichtung für ein Mähwerksgehäuse, das von einem einen Rahmen aufweisenden Fahrzeug über mindestens eine Hubstange getragen wird und über einen Hebel höhenverstellbar ist, der an seinem einen Ende von einer Bedienungsperson erfaßbar ist und ein zweites Ende aufweist, das am Fahrzeug um eine horizontale Achse schwenkbar gelagert ist.

Diese bekannte Höheneinstellvorrichtung (US-A-4 733 522) kann bei verschiedenen Schnitthöhen des Mähwerkes und in einer Transportstellung festgestellt werden. Hierzu ist der Handhebel mit einem durch den Daumen einer Bedienungsperson betätigbaren Knopf versehen, der auf ein Feststellgestänge einwirkt, das seinerseits mit einer Klinke versehen ist, die in verschiedene den einzelnen Höheneinstellungen entsprechende Rasterstellen eingreifen kann. Solche Feststellvorrichtungen sind aufwendig, benötigen viele Teile, einschließlich Lager und Federn und sind nicht immer einfach zu bedienen.

Die mit der Erfindung zu lösende Aufgabe wird darin gesehen, ein höhenverstellbares Mähwerksgehäuse in einfacher Weise und mit einfachen Mitteln in verschiedenen Schnitthöhen und in einer Transportstellung feststellen zu können. Diese Aufgabe ist nach der Erfindung dadurch gelöst worden, daß die Hubstange an dem Hebel angelenkt ist, der Rahmen mit einem Tragteil versehen ist, der Tragteil nebeneinanderliegende Stufen unterschiedlicher Höhe aufweist und der Hebel wahlweise mit einer der Stufen kuppelbar ist.

Auf diese Weise braucht die Bedienungsperson zum Höhenverstellen des Mähwerksgehäuses den Hebel nur hochzuziehen und auf einer der gewünschten Stufen des Tragteils wieder niederzulassen, wodurch eine neue Höhe eingestellt und das Mähwerksgehäuse in dieser Position wieder festgelegt ist. Ein kompliziertes Feststellgestänge ist nicht erforderlich. Zu wartende Teile entfallen und Hebel und Tragteil können sogar aus Kunststoff hergestellt sein.

Der Hebel selbst braucht nicht verschwenkbar ausgebildet zu sein, um mit einer der Stufen gekuppelt zu werden, wenn nach einem weiteren Vorschlag der Erfindung der Tragteil auf dem Rahmen seitlich verschiebbar angeordnet ist. Der Tragteil wird dann lediglich so weit verschoben, bis der Hebel eine Stufe mit der gewünschten Höhe erfassen kann.

Nach der Erfindung kann ferner vorgesehen werden, daß der Hebel mit einem sich seitlich erstreckenden Handgriff versehen ist und der Tragteil bei hochgeschwenktem Hebel manuell seitenverschiebbar ist. Auf diese Weise kann die Bedienungsperson den Hebel mit beiden Händen erfassen, hochschwenken und dann den Tragteil, beispielsweise mit ihren Daumen, in eine neue Position schieben. Der Tragteil ist hierzu mit einer Führung versehen und benötigt keine gesonderte Vorrichtung, um in der Führung verschoben werden zu können.

Das Kuppeln des Hebels mit dem Tragteil kann in besonders einfacher Weise dadurch erfolgen, daß der Hebel mindestens einen Auflagefinger aufweist, der wahlweise auf eine der Stufen auflegbar ist. Die Stufen können hierzu in ihrem oberen Bereich gerundet ausgebildet sein, damit sie von dem Auflagefinger leichter erfaßt werden können.

Die Führung des Tragteils bei seiner Seitenverschiebung kann erfindungsgemäß dadurch erreicht werden, daß an dem Tragteil ein Schwenkteil angeordnet ist, der horizontal schwenkbar mit dem Fahrzeug verbunden ist und den Tragteil bei seiner Seitenverschiebung auf einem Kreisabschnitt führt.

Um mit Sicherheit ausschließen zu können, daß sich der Tragteil seitlich verstellt, wenn der Hebel nicht von der Bedienungsperson angehoben wurde, können den Stufen des Tragteiles Rasterstellen zugeordnet sein, die am Rahmen vorgesehen sind und in die der Tragteil eingreifen kann. Der Tragteil kann mit dieser Maßnahme dann in einer seiner Betriebsstellungen blockiert werden.

Nach der Erfindung kann der Hebel noch mit dem Gewicht des Mähwerksgehäuses belastet sein, so daß das Gewicht den Hebel nach unten zieht und damit den Tragteil in seiner Stellung festhält, der somit auch nicht nach oben ausweichen kann.

Im einzelnen kann der Schwenkteil als mit dem Tragteil fest verbundener Schwenkhebel ausgebildet sein, der mit seinem rückwärtigen Ende in eine im Rahmen vorgesehene Öffnung einsetzbar ist, die die vertikale Achse bildet, um die der Schwenkhebel und der Tragteil schwenkbar sind.

Damit die Bedienungsperson den Tragteil mit ihren Daumen leicht verstellen kann, wird weiter vorgeschlagen, daß der Schwenkhebel sich mit seinem vorderen Ende bis in den Bereich des Handgriffes des Hebels erstreckt. Dieses vordere Ende kann dann auch noch als Schnitthöhenanzeiger dienen, wenn es mit einer entsprechenden Skala zusammenwirkt.

Der Hebel kann besonders stabil ausgebildet und leicht mit beiden Händen ergriffen werden, wenn der Hebel als U-förmiger Bügelteil ausgebildet ist, dessen Steg als Griffteil ausgebildet ist und dessen Schenkel mit ihren freien Enden an dem Rahmen um eine horizontale Achse verschwenkbar angelenkt sind und je eine Hubstange allseits beweglich aufnehmen.

In der Zeichnung ist ein nachfolgend näher erläutertes Ausführungsbeispiel der Erfindung dargestellt. Es zeigt:

Fig. 1      ein mit einem Mähwerk ausgerüstetes Fahrzeug für die Landschaftspflege,

Fig. 2     eine Höheneinstellvorrichtung für das Mähwerk in perspektivischer Darstellung,

Fig. 3     die Höheneinstellvorrichtung nach Fig. 2 in auseinandergezogener Darstellung und teilweise im Schnitt,

Fig. 4     eine weitere Ausführung der Höheneinstellvorrichtung in perspektivischer Darstellung und

Fig. 5     ein in Fig. 4 dargestelltes Tragteil in der Draufsicht.

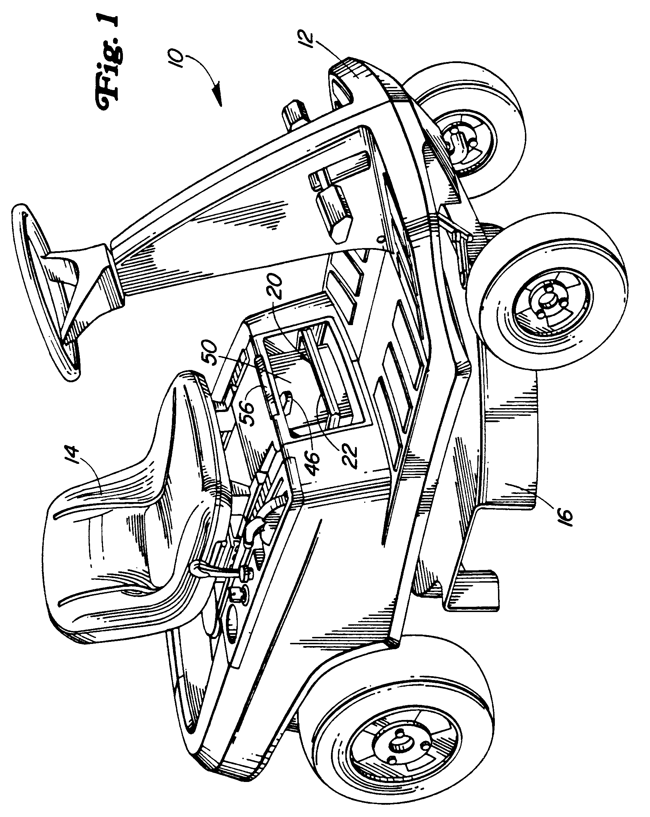

In Fig. 1 der Zeichnung ist ein angetriebenes Fahrzeug 10 für den Einsatz in der Rasen- und Grundstückspflege dargestellt. Es weist einen Grundrahmen 12, einen Fahrersitz 14 und ein Mähwerksgehäuse 16 mit einem nicht dargestellten Mähwerk für den Rasenschnitt auf.

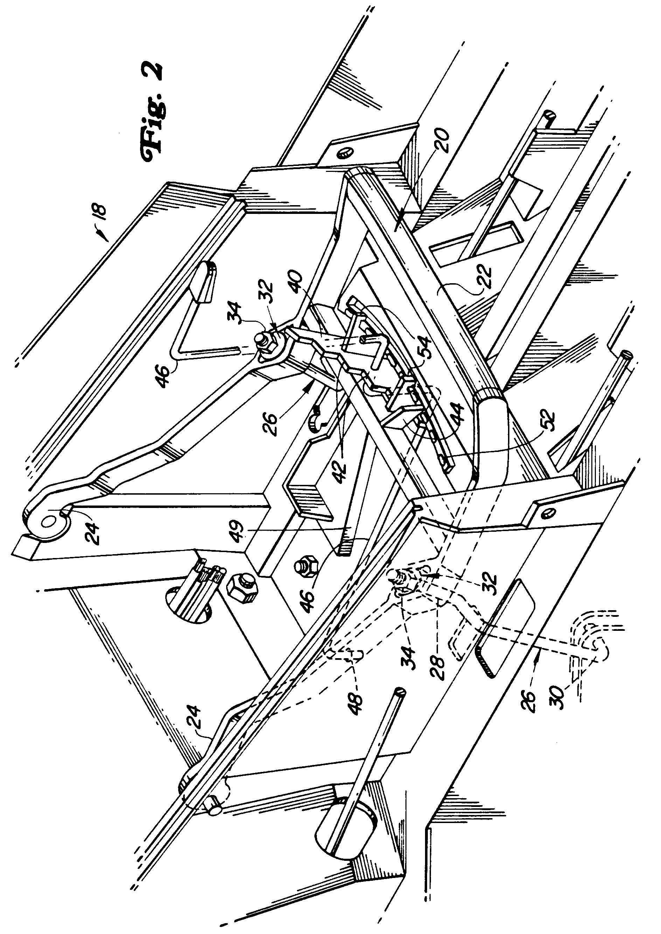

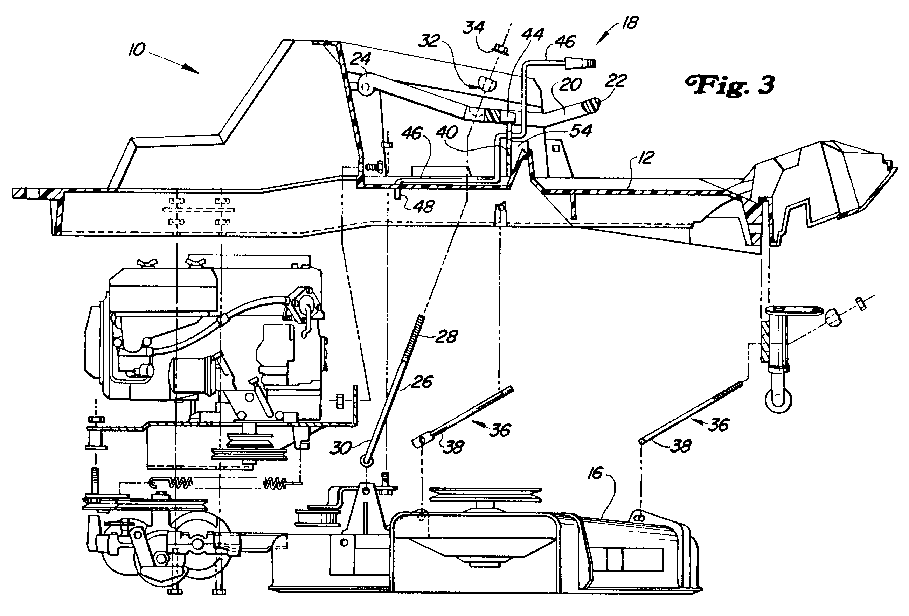

Über eine in den Fig. 2 und 3 wiedergegebene Höheneinstellvorrichtung 18 kann die Schnitthöhe des Mähwerks eingestellt werden. Die wesentlichen Teile dieser Höheneinstellvorrichtung sind in einem Gehäuseabschnitt angeordnet, der zur Aufname des Fahrersitzes 14 dient. So ist unterhalb des Sitzes 14 ein U-förmig ausgestalteter und aus Kunststoff bestehender Bügelteil 20 angeordnet, der ein erstes als Griffteil ausgebildetes Ende 22 aufweist, das den Steg des Bügels bildet und von einer sich auf dem Fahrersitz befindlichen Bedienungsperson ergriffen und hochgeschwenkt werden kann. Für die schwenkbare Lagerung sind die rückwärtigen Enden 24 oder die rückwärtigen Enden der beiden Schenkel des Bügelteils mit integrierten und nach außen weisenden Lagerstiften versehen, die von in dem Grundrahmen 12 vorgesehenen Öffnungen aufgenommen werden können. Die rückwärtigen Enden 24 des Bügelteils 20 sind als abgerundete Lageraugen ausgebildet, die von entsprechend abgerundeten Auflagern, die in den Grundrahmen 12 eingeformt sind, drehbar aufgenommen werden können. Die abgerundeten Lageraugen übertragen einen Teil des Gewichtes des Bügelteils 20 direkt auf den Grundrahmen 12. Zwei mit gegenseitigem Seitenabstand angeordnete Hubstangen 26 sind mit ihren oberen Enden 28 schwenkbar mit den beiden Schenkeln des Bügelteils 20 und mit ihren unteren Enden 30 schwenkbar mit dem Mähwerksgehäuse 16 verbunden. Die Hubstangen 30 sind an den Bügelteil bzw. dessen Schenkel über eine Kugelzapfenlagerung 32 angeschlossen. Diese Lagerung besteht aus in die Schenkel des Bügelteils 20 integrierten Kugelpfannen, die entsprechend gerundet ausgebildete Kugelteile aufnehmen. Die Hubstreben sind dabei durch die Kugelpfannen und Kugelteile geführt und sind damit in dem Bügelteil 20 allseits beweglich aufgenommen. Sie werden über Muttern 34 gesichert, die von oben auf die oberen Enden 28 der Hubstangen 26, die hierzu mit einem Gewinde versehen sind, aufschraubbar sind. Wird der Bügelteil 20 nun von der Bedienungsperson hochgeschwenkt, so werden die Hubstangen 26 zusammen mit dem Mähwerksgehäuse 16 dann mithochgeschwenkt. Aus Festigkeitsgründen können die beiden Schenkel des Bügelteils 20 noch im Bereich ihrer Kugelzapfenlagerungen 32 durch eine Querstrebe miteinander verbunden sein.

Das Mähwerksgehäuse 16 ist, wie aus Fig. 3 zu erkennen ist, über ein Parallelgestänge 36 an dem Grundrahmen 12 aufgehängt, so daß das Mähwerksgehäuse bei seiner Höhenverstellung parallel verstellt wird. Zu diesem Gestänge 36 gehört ein vorderes und ein rückwärtiges mit dem Mähwerksgehäuse schwenkbar verbundenes Paar Streben 38, wobei das rückwärtige Paar an den Grundrahmen und das vordere Paar Streben an eine schwenkbare Vorderachse angelenkt ist. Das Mähwerksgehäuse 16 kann auf diese Weise die Kippbewegungen der Vorderachse mitmachen, wenn das Fahrzeug 10 auf unebenem Boden eingesetzt wird.

Zu der Höheneinstellvorrichtung 18 gehört ferner ein Tragteil 40, der von dem Grundrahmen 12 getragen wird und von der Bedienungsperson auf dem Grundrahmen 12 seitlich verschoben werden kann. Der Tragteil 50 weist mehrere seitlich nebeneinander angeordnete Stufen 42 mit ansteigender Höhe auf, wobei der Bügelteil wahlweise auf einer der Stufen 42 über einen an ihn angeordneten Auflagefinger 44 zur Auflage kommen kann. Durch seitliches Verschieben des Tragteils 40 und Auflegen des Bügelteils 20 bzw. des Auflagefingers 44 auf eine andere Stufe 42 wird die Höheneinstellung des Mähwerksgehäuses verändert. Mit dem Tragteil ist ein Schwenkhebel 46 fest verbunden, der an seinem rückwärtigen Ende in eine vertikale Öffnung 48 eingesetzt ist und in dieser verschwenken kann, die in dem Grundrahmen 12 vorgesehen ist. Bei der seitlichen Verstellung des Tragteils 40 wird er damit durch den Schwenkhebel 46 auf einem horizontalen Bogen geführt. Eine kastenähnliche Aussparung 49 ist noch in dem Boden des Gehäuseabschnittes vorgesehen und vermittelt dem Schwenkhebel 46 ausreichend viel Freiraum, um unterhalb einer nicht dargestellten Batterie verschwenken zu können. Der Schwenkhebel 46 ist durch den Tragteil noch nach vorne geführt und nach oben geführt und wieder nach vorne geführt, wo er sich durch eine vordere Abdeckung 50 des Gehäuseabschnittes bis zwischen die Beine der Bedienungsperson erstreckt. An dem Grundrahmen 12 sind außerdem Feststellkerben 52 vorgesehen, in die der Tragteil 40 in seiner jeweiligen Stellung vermittels an ihm vorgesehener Hakenteile 54 einrasten kann. Der Tragteil ist dann gegen ein seitliches Verstellen festgelegt, wenn der Bügelteil 20 auf einer der Stufen 52 ruht. Die Hakenteile 54 und der Schwenkhebel 46 halten den Tragteil 40 während des Einsatzes in einer aufrechten Stellung.

Um die Schnitthöhe des Mähwerkes einstellen zu können, ergreift die Bedienungsperson den Bügelteil 20 mit beiden Händen. Sie kann bei dem Hochheben des Bügelteils 20 auf dem Fahrersitz 14 sitzen bleiben. Beim Hochheben verschwenkt der Bügelteil nach oben um seine Lagerstellen am Grundrahmen 12, wobei die Hubstangen 26 zusammen mit dem Mähwerksgehäuse 16 sich ebenfalls nach oben verstellen.

Der Tragteil 40 wird dabei von dem Gewicht des Mähwerkes und des Bügelteiles 20 entlastet und kann daher auf den Feststellkerben 52 seitlich verstellt bzw. in eine neue Stellung verschoben werden. Dies kann in einfacher Weise dadurch erfolgen, daß die Bedienungsperson beim Hochheben des Bügelteils mit beiden Händen mit seinen Daumen den Schwenkhebel 46 in eine neue Position verstellt, die der gewünschten Schnitthöhe entspricht. Eine in Fig. 1 erkennbare Schnitthöhenanzeige 56 kann im Bereich des Schwenkhebels 46 an einer Wand des Gehäuseabschnittes für den Fahrersitz vorgesehen sein, die entsprechende Ziffern aufweist, die den einzelnen Stufen 42 im Tragteil 40 zugeordnet sind. Damit kann die Bedienungsperson leicht erkennen, wohin sie den Schwenkhebel 46 zu verstellen hat, um die gewünschte Schnitthöhe einstellen zu können. Danach wird der Bügelteil 20 wieder auf eine neue Stufe 42 abgelassen, die der neuen Schnitthöhe entspricht. Liegt der Bügelteil 20 wieder auf dem Tragteil 40 auf, dann drückt das Gewicht des Bügelteils und das des Mähwerkes den Tragteil 40 fest auf den Grundrahmen 12. Die Feststellkerben 52 verhindern ein seitliches Verstellen des Tragteiles 40, wenn der Tragteil 40 wieder mit dem Gewicht des Bügelteiles und dem des Mähwerkes belastet ist. Eine ungewünschte Verstellung des Mähwerksgehäuses ist damit ausgeschlossen. Andererseits kann es bei Arbeiten auf unebenem Boden durchaus vorkommen, daß das Mähwerksgehäuse dann nach oben verschoben wird. In einem solchen Falle wird der Bügelteil 20 nicht mehr das Gewicht des Mähwerkes tragen, und der Bügelteil kann nicht mehr den Tragteil nach unten auf den Boden des Grundrahmens pressen. Die beim Arbeiten auf unebenem Boden auftretenden Kräfte können auch dazu führen, daß sich der Schwenkhebel 46 nach oben verstellen will. Eine mögliche vertikal Verstellung wird aber dadurch verhindert oder begrenzt, daß sich unmittelbar oberhalb des Schwenkhebels 46 die Batterie befindet, so daß in diesen Fällen der Tragteil 40 in der von der Bedienungsperson eingestellten Lage verbleibt.

Beim seitlichen Verstellen des Schwenkhebels 46 wird dieser mit einer Drehkraft belastet, die dazu führen kann, daß der vorlaufende Teil des seitlich zu verstellenden Tragteils 40 nach unten gegen die Feststellkerben 52 drückt. So wird, wenn eine Bedienungsperson beispielsweise den Schwenkhebel 46 mit Bezug auf Fig. 2 nach links verschiebt, die von der Hand ausgehende Kraft dazu führen, daß der Schwenkhebel 46 und der daran befestigte Tragteil 40 eine Drehung entgegen dem Uhrzeigerdrehsinn ausführen wollen. Die linke oder vorlaufende Kante des Tragteils 40 würde dann in die Feststellkerben 52 gedrückt. Dies würde eine Verschiebung des Tragteiles über die Feststellkerben zumindest erschweren. Da aber der Schwenkhebel von der Öffnung 48 aufgenommen ist, werden die auftretenden Drehkräfte von dem Schwenkhebel über die Öffnung 48 auf den Grundrahmen 12 übertragen, so daß der Tragteil 40 sich nicht drehen oder verkippen kann. Der Schwenkhebel, der in der Öffnung 48 aufgenommen ist, hält den Tragteil 40 in seiner ausgerichteten Stellung, wenn er über den Feststellkerben verstellt wird, und fängt die Drehkräfte entsprechend auf. Ein seitliches Verstellen des Tragteiles kann damit leichter ausgeführt werden.

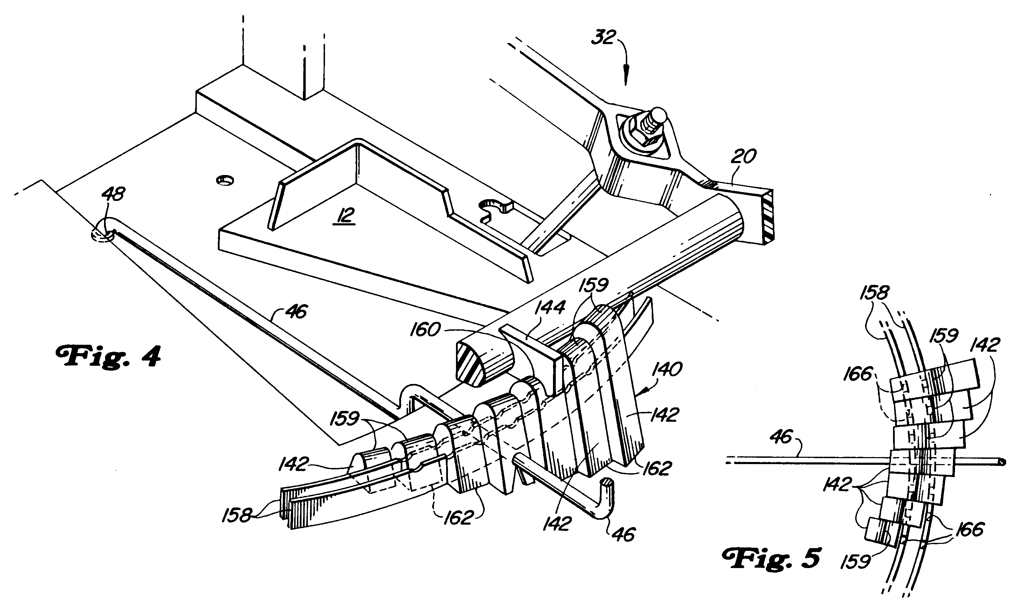

In Fig. 4 ist eine weitere Ausführungsform der Höheneinstellvorrichtung dargestellt. Ein Tragteil 140 ist mit dem Schwenkhebel 46 derart fest verbunden, daß er um die Öffnung 48 in einem Bogen verschwenken kann. Der Tragteil 140 ist auf zwei hochstehenden Leisten 158 verschiebbar angeordnet, die sich seitlich in einem Bogen erstrecken und in den Grundrahmen 12 integriert sind. Auch der Tragteil 140 ist mit Stufen 142 ausgerüstet, die zueinander seitlichen Abstand haben und unterschiedliche Höhen aufweisen. Jede Stufe 142 kann den Bügelteil 20 in einer anderen Höhenposition aufnehmen. Jede Stufe 142 ist an ihrer Spitze 159 abgerundet ausgebildet, um einen entsprechend abgerundeten Teil 160 aufnehmen zu können, der an dem Auflagefinger 144 des Bügelteiles 20 vorgesehen ist. Wie aus Fig. 5 zu erkennen ist, sind die Spitzen 159 der Stufen 142 in Längsrichtung gesehen hintereinander angeordnet oder in Längsrichtung versetzt und damit an die Schwenkbewegung des Auflagefingers 144 angepaßt, wenn der Bügelteil 20 um seine Anlenkstellen am Grundrahmen 12 vertikal verschwenkt wird. Die Stufen 142 sind im wesentlichen pyramidenförmig ausgebildet, wobei jede einen Basisteil 162 aufweist, der dazu beiträgt, daß der Tragteil in seiner aufrechten Stellung gehalten wird. Die höheren Stufen 142 sind mit vertikal sich erstreckenden Nuten versehen, in denen die hochstehenden Leisten 158 aufgenommen sind. Auch die Leisten tragen mit dazu bei, daß der Tragteil in seiner aufrechten Stellung gehalten wird. Feststellkerben weisen Aussparungen 166 auf, die in die Leisten 158 eingearbeitet sind, um den Schwenkhebel 46 in seinen verschiedenen und einer gewünschten Schnitthöhe entsprechenden Stellungen aufnehmen zu können. Das Gewicht des Mähwerkes und das des Bügelteils 20 sichern den Schwenkhebel 46 in der entsprechenden Aussparung 166 während des Einsatzes.

**Patentansprüche**

1. Höheneinstellvorrichtung für ein Mähwerksgehäuse (16), das von einem einen Rahmen (12) aufweisenden Fahrzeug (10) über mindestens eine Hubstange (26) getragen wird und über einen Hebel (20) höhenverstellbar ist, der an seinem einen Ende von einer Bedienungsperson erfaßbar ist und ein zweites Ende aufweist, das am Fahrzeug (10) um eine horizontale Achse schwenkbar gelagert ist, dadurch gekennzeichnet, daß die Hubstange (26) an dem Hebel (20) angelenkt ist, der Rahmen (12) mit einem Tragteil (40, 140) versehen ist, der Tragteil nebeneinanderliegende Stufen (42, 142) unterschiedlicher Höhe aufweist und der Hebel (20) wahlweise mit einer der Stufen (42, 142) kuppelbar ist.

2. Höheneinstellvorrichtung nach Anspruch 1, dadurch gekennzeichnet, daß der Tragteil (40, 140) auf dem Rahmen (12) seitlich verschiebbar angeordnet ist.

3. Höheneinstellvorrichtung nach Anspruch 1 oder 2, dadurch gekennzeichnet, daß der Hebel (20) mit einem sich seitlich erstreckenden Handgriff versehen ist und der Tragteil (40, 140) bei hochgeschwenktem Hebel (20) manuell seitenverschiebbar ist.

4. Höheneinstellvorrichtung nach einem oder mehreren der vorherigen Ansprüche, dadurch gekennzeichnet, daß der Hebel (20) mindestens einen Auflagefinger (44, 144) aufweist, der wahlweise auf eine der Stufen (42, 142) auflegbar ist.

5. Höheneinstellvorrichtung nach einem oder mehreren der vorherigen Ansprüche, dadurch gekennzeichnet, daß an dem Tragteil (40, 140) ein Schwenkteil (46) angeordnet ist, der horizontal schwenkbar mit dem Fahrzeug (10) verbunden ist und den Tragteil bei seiner Seitenverschiebung auf einem Kreisabschnitt führt.

6. Höheneinstellvorrichtung nach einem oder mehreren der vorherigen Ansprüche, dadurch gekennzeichnet, daß den Stufen (42, 142) des Tragteiles (40, 142) Rasterstellen (52, 152) zugeordnet sind, die am Rahmen (12) vorgesehen sind und in die der Tragteil (40, 140) eingreifen kann.

7. Höheneinstellvorrichtung nach Anspruch 6, dadurch gekennzeichnet, daß der Hebel (20) mit dem Gewicht des Mähwerksgehäuses belastet ist.

8. Höheneinstellvorrichtung nach Anspruch 5, dadurch gekennzeichnet, daß der Schwenkteil als mit dem Tragteil (40, 140) fest verbundener Schwenkhebel (46) ausgebildet ist, der mit seinem rückwärtigen Ende in eine im Rahmen (12) vorgesehene Öffnung (48) einsetzbar ist, die die vertikale Achse bildet, um die der Schwenkhebel und der Tragteil schwenkbar sind.

9. Höheneinstellvorrichtung nach Anspruch 8, dadurch gekennzeichnet, daß der Schwenkhebel (46) sich mit seinem vorderen Ende bis in den Bereich des Handgriffes des Hebels (20) erstreckt.

10. Höheneinstellvorrichtung nach einem oder mehreren der vorherigen Ansprüche, dadurch gekennzeichnet, daß der Hebel als U-förmiger Bügelteil (20) ausgebildet ist, dessen Steg als Griffteil (22) ausgebildet ist und dessen Schenkel mit ihren freien Enden an dem Rahmen (12) um eine horizontale Achse verschwenkbar angelenkt sind und je eine Hubstange (26) allseits beweglich aufnehmen.

Fig. 1

Fig. 2

EP 0 518 160 A1

Fig. 3

**Fig. 4**

**Fig. 5**

EP 0 518 160 A1

**Europäisches Patentamt**

# EUROPÄISCHER RECHERCHENBERICHT

Nummer der Anmeldung

EP    92 10 9224

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | EP-A-0 217 772 (HUSQVARNA AKTIEBOLAG FACK) <br> * das ganze Dokument * | 1 | A01D34/74 |
| D | & US-A-4 733 522 | | |
| | --- | | |
| A | EP-A-0 144 214 (HONDA GIKEN KOGYO KABUSHIKI KAISHA) <br> * Anspruch 1; Abbildungen * | 1 | |
| | --- | | |
| A | US-A-3 706 188 (R. G. QUIRAM) <br> * Abbildungen * | 1 | |
| | --- | | |
| A | FR-A-2 374 835 (MASSEY-FERGUSON INC.) <br> * Seite 3, Zeile 22 - Seite 5, Zeile 35; Abbildungen 1,2 * | 1 | |
| | --- | | |
| A | DE-A-2 117 665 (JACOBSEN MANUFACTURING CO.) | | |
| | ----- | | |
| | | | **RECHERCHIERTE SACHGEBIETE (Int. Cl.5 )** <br> A01D |

Der vorliegende Recherchenbericht wurde für alle Patentansprüche erstellt

| Recherchenort | Abschlußdatum der Recherche | Prüfer |
|---|---|---|
| BERLIN | 11 AUGUST 1992 | MERCKX A. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes Dokument

EPO FORM 1503 03.82 (P0403)